# DEMANDE DE BREVET EUROPEEN

(11) **EP 1 261 093 A1**
(43) Date de publication de la demande: **27.11.2002**
(21) Numéro de dépôt: 02356096.4
(22) Date de dépôt: 23.05.2002
(51) Int. Cl.: H02G 3/32

(54) **Dispositif de fixation d'une goulotte sur un élément de support et chemin de cables ou analogues en comportant application**

(30) Priorité: 23.05.2001 FR 0106842
(71) Demandeur: Gewiss France SA, 21430 Liernais (FR)
(72) Inventeur: Bailleux, Jacques, 21430 Bard Le Regulier (FR)
(74) Mandataire: Myon, Gérard

(57) **Abrégé**

Ce dispositif de fixation est destiné à être rapporté sur l'élément de support (2) et comporte deux branches (17, 17') de maintien latéral de la goulotte (1). Chaque branche (17, 17') comporte l'un d'au moins deux organes (19, 19') de retenue de la goulotte (1) entre les deux branches (17, 17'). Le dispositif de fixation comporte des première et deuxième pièce (13, 13') destinées ; à être disposées de part et d'autre de la goulotte (1). Chacune de ces première et deuxième pièces (13, 13') comporte l'une des deux branches (17, 17') dont chacune se prolonge par une embase (16, 16') de fixation sur, l'élément de support (2).

## Description

La présente invention concerne un dispositif de fixation d'une goulotte sur un élément de support, ainsi qu'un chemin de câbles ou analogues, formé d'une succession de goulottes en tôle.

Il est connu, par exemple du document FR-A-2 686 141, de réaliser un chemin de câbles à partir de plusieurs goulottes en tôle aboutées et assemblées au moyen d'éclisses. Ce chemin est généralement supporté soit par des équerres, soit par des consoles qui peuvent être fixées directement au mur ou montées sur des barres verticales, ce qui permet de faire cheminer plusieurs chemins les uns au dessus des autres, ces barres verticales pouvant être soit fixées au mur, soit suspendues au plafond, par exemple au moyen du dispositif divulgué dans le document FR-2 692 643. Pour fixer les goulottes en tôle sur les consoles, il est connu d'utiliser des boulons ou des pattes parfois dénommées « crapaud », dont on trouvera un exemple dans le document FR-B1-2 730 028.

Lors du montage des goulottes sur les consoles ou les équerres préalablement installées sur le site à équiper, on met en place ces boulons ou ces pattes tout en réglant et en maintenant les goulottes en position jusqu'à leur immobilisation définitive. Cela n'est pas toujours aisé à réaliser pour un opérateur susceptible de travailler en hauteur, dans une position inconfortable.

Dans GB-A-2 014 643, il est décrit un élément de fixation d'une goulotte sur un support. Cet élément de fixation est destiné à être rapporté sur le support et comprend à cet effet une embase, à partir de laquelle s'étendent vers le haut deux branches latérales. Un chemin de câbles incorporant des éléments de fixation semblables à celui dont il est question dans GB-A-2 014 643 est d'installation aisée mais présente l'inconvénient d'être coûteux.

L'invention, qui entend plus particulièrement remédier à cet inconvénient, a pour but de réduire le coût d'un chemin de câbles ou analogues dont l'installation est aisée.

A cet effet, l'invention a pour objet un dispositif de fixation tel que défini par la revendication 1.

D'autres caractéristiques avantageuses de ce dispositif de fixation sont définies par les revendications 2 à 7.

Selon encore d'autres caractéristiques avantageuses de ce dispositif de fixation :
- chaque organe de retenue comporte une butée de retenue pour un bord du trou latéral correspondant, cette butée de retenue étant sensiblement tournée dans la direction vers laquelle est dirigé un fond de la première goulotte,
- les organes de retenue ont la forme de moyens d'encliquetage de la première goulotte entre les deux branches,
- chaque organe de retenue comporte un bout arrondi.

L'invention a également pour objet un chemin de câbles ou analogues tel que défini par la revendication 8.

D'autres caractéristiques avantageuses de ce chemin de câbles ou analogues sont définies par les revendications 9 à 13.

Selon encore d'autres caractéristiques avantageuses de ce chemin de câbles ou analogues :
- les organes de retenue et les tous latéraux des première et deuxième rangées sont longitudinaux, les organes de retenue s'adaptant en largeur dans ces trous latéraux,
- les deux branches comportent respectivement deux portions d'extrémité formant conjointement un convergent dirigé sensiblement dans la même direction qu'un fond de la première goulotte et destiné à faciliter la mise en place de celle-ci entre les deux branches.

L'invention sera bien comprise à la lecture de la description qui va suivre, donnée uniquement à titre d'exemple et faite en se référant aux dessins annexés, sur lesquels :
- la figure 1 est une vue éclatée, en perspective, d'une portion d'un chemin de câbles conforme à l'invention, cette portion comprenant notamment une goulotte partiellement représentée, une console et un dispositif, conforme à l'invention, de fixation de la goulotte sur cette console ;
- la figure 2 est une vue en coupe transversale selon le plan II de la figure 1, seulement une partie de la console étant représentée sur cette figure 2 ;
- la figure 3 est une vue analogue à celle de la figure 2 et représente une portion d'un chemin de câbles qui est semblable à celui des figures 1 et 2, mais s'en distingue toutefois en ce qu'il est formé de goulottes plus hautes ;
- la figure 4 est une vue en perspective d'une pièce d'un dispositif de fixation d'une goulotte sur une console, ce dispositif de fixation étant selon une variante de réalisation de l'invention ; et
- les figures 5 à 8 sont des vues semblables à celles des figures 2 et 3, et illustrent plusieurs étapes successives du montage d'un chemin de câbles incorporant le dispositif de fixation dont une pièce est représentée à la figure 4.

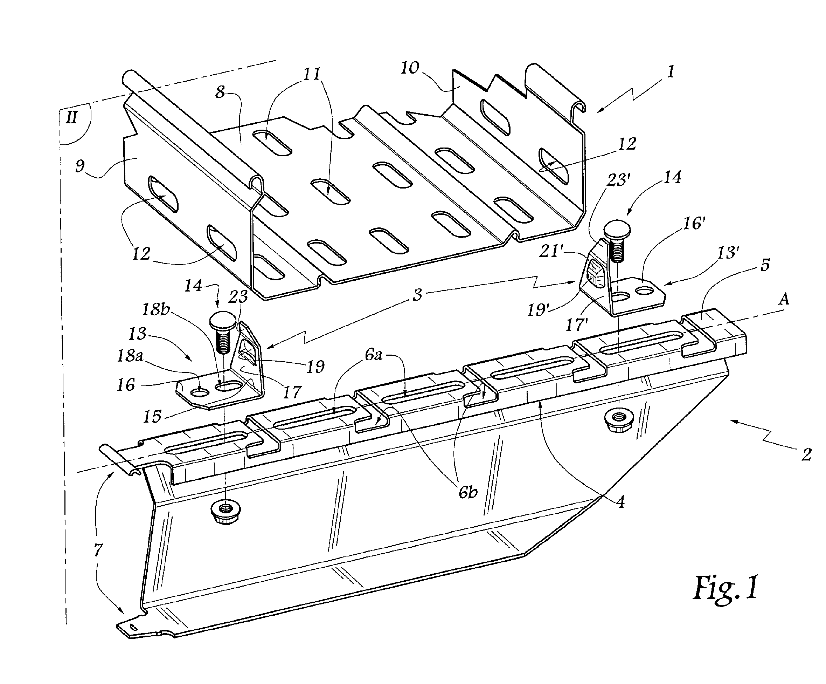

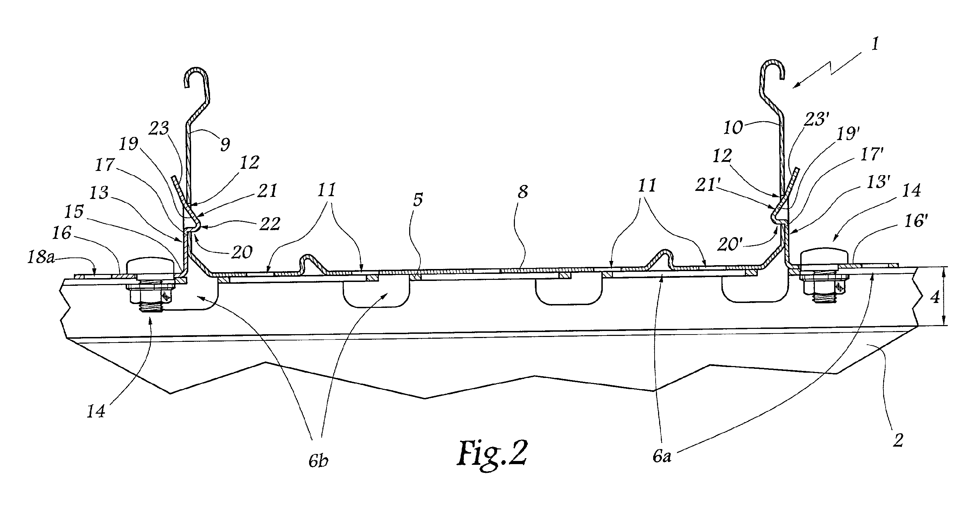

Un chemin de câbles conforme à l'invention est formé d'une succession de goulottes 1. Sur les figures 1 et 2, on n'en a représenté qu'une portion, laquelle comporte une telle goulotte 1, un élément de support formé par une console 2, et un dispositif 3 de fixation de la goulotte 1 sur cette console 2.

Dans l'ensemble de la description et des revendications, les termes « transversalement », « latéral », « haut », « descendre » et les termes analogues se réfèrent à l'orientation et à la direction du chemin de câbles.

La console 2 est connue en soi et supporte habituellement un chemin de câble fixé dessus au moyen de dispositifs de fixation classiques, tels que ceux mentionnés en préambule. En effet, selon un aspect avantageux de l'invention, celle-ci peut être mise en oeuvre avec des consoles standards, par exemple polyvalentes. Dans l'exemple représenté, la console 1 utilisée classiquement peut supporter des goulottes de différentes largeurs. Elle peut en outre être employée à la fois pour des goulottes en treillis soudé et pour des goulottes en tôle perforée.

Cette console 2 est une pièce d'un seul tenant obtenue par pliage d'un flan de tôle préalablement découpé. Elle comporte une partie de support 4, qui est allongée selon un axe médian A transversal à la goulotte 1 et comprend une portion supérieure et plane 5, sur laquelle repose cette goulotte 1. Cette partie de support 4 est percée de trous 6a et de trous 6b, disposés alternativement. Les trous 6a sont oblongs, placés dans le prolongement les uns des autres, selon l'axe médian A, et sont prévus dans la portion supérieure 5. Les trous 6b permettent le montage, selon un agencement connu, d'une goulotte en treillis soudé, non représentée.

La console 2 se prolonge latéralement par des moyens haut et bas de fixation 7, qui permettent son montage sur une crémaillère, comme cela est décrit dans le brevet FR-2 736 138.

La goulotte 1, supportée par la console 2, comporte un fond plat 8, à partir duquel s'étendent à angle droit deux parois latérales 9 et 10. Elle est obtenue de manière connue par formage d'une tôle perforée et allongée. Cette dernière est percée de rangées parallèles de trous oblongs de ventilation, ces rangées étant dirigées selon sa longueur et disposées à intervalles réguliers. Cette tôle est pliée de manière à ce que les deux rangées de trous extrêmes se trouvent chacune dans l'une des parois latérales 9 et 10, et s'étendent à la même distance du fond 8. On repère par la référence 11 les trous dans le fond 8, et par la référence 12 les trous latéraux dans les parois latérales 9 et 10.

Le dispositif de fixation 3, se compose de deux pièces 13 et 13' identiques. Ces dernières sont fixées symétriquement de part et d'autre de la goulotte 1, sur la partie de support 4 de la console 2, chacune au moyen de l'un de deux boulons 14. La tige de la vis de chaque boulon 14 passe dans l'un des trous 6a, dont la forme oblongue et la répartition régulière selon l'axe A permettent le réglage précis de l'écartement des pièces 13 et 13'.

Les pièces 13 et 13' étant identiques, seule la première sera décrite. La pièce 13 est symétrique par rapport à un plan transversal à la goulotte 1, à savoir le plan de coupe II. Elle est formée dans un flan de tôle allongé, lequel est plié sensiblement à angle droit, selon une direction transversale. Le pli 15 correspondant sépare une embase de fixation 16 globalement rectangulaire d'une aile de maintien latéral 17 globalement triangulaire. L'extrémité libre 16a de l'embase 16 est transversalement décalée de l'aile 17. L'embase de fixation 16 est percée d'un trou circulaire 18a et d'un trou oblong 18b, dans lequel est enfilée la tige de la vis anti-rotation de l'un des deux boulons 14. Le trou circulaire 18a permet l'emploi d'une vis standard à la place de cette vis anti-rotation.

Une bosse 19 formant organe de retenue de la goulotte 1 a été réalisée par emboutissage de l'aile 17. Elle est dirigée dans la direction opposée à celle de l'embase 16. Elle est allongée selon une direction parallèle au pli 15 et s'adapte en largeur dans un trou latéral 12 de la goulotte 1. Elle comporte une surface inférieure 20 et une surface supérieure 21 reliées l'une à l'autre par un bout arrondi 22. La surface inférieure 20, qui forme une butée d'arrêt de la goulotte 1, est parallèle à la portion supérieure 5 de la console 2 et la surface supérieure 21 est inclinée par rapport à cette portion supérieure 5, si bien que la bosse 19 forme moyen d'encliquetage de la goulotte 1.

L'aile 17 se termine par une portion d'extrémité 23 au-delà de la bosse 19. Cette portion d'extrémité 23 est légèrement inclinée vers l'extérieur de la goulotte 1, sensiblement dans le prolongement de la surface supérieure 21.

Dans ce qui suit, la référence d'une partie de la pièce 13' est construite en accolant un prime (') à la référence désignant la même partie sur la pièce 13.

L'installation de la portion de chemin de câbles représentée aux figures 1 et 2 commence par le montage, soit en usine, soit sur place, des pièces 13 et 13' sur la console 2. Ces pièces 13 et 13' sont fixées, au moyen des deux boulons 14, de manière à ce que leurs bosses 19 et 19' soient dirigées l'une vers l'autre, leurs ailes 17 et 17' étant séparées d'une distance correspondant à la largeur de la goulotte 1 et parallèles entre elles, à l'exception des portions d'extrémité 23 qui forment conjointement un convergent destiné à faciliter le montage de la goulotte 1. Ensuite, la console 2 est fixée sur son support. On encliquette alors la goulotte 1 entre les ailes 17 et 17' qui, à cette occasion, s'écartent élastiquement l'une de l'autre pour ensuite revenir sensiblement dans leur position d'origine. Cette dernière opération est aisément réalisée par l'installateur, même lorsque la console 2 est fixée en hauteur.

Après cette installation, la goulotte 1 est maintenue latéralement entre les ailes 17 et 17' et elle est retenue par les bosses 19 et 19', chacune engagée dans l'un de deux trous latéraux 12 en vis-à-vis. Comme il est arrondi, le bout 22 est inoffensif pour les câbles, non représentés, qui sont destinés à être placés dans la goulotte 1. Les deux surfaces inférieures 20 et 20', chacune formant une butée pour le bord inférieur de l'un de ces deux trous latéraux 12, s'opposent au retrait de La goulotte 1. En revanche, la pente des surfaces supérieures 21 et 21' autorise le déplacement de la goulotte 1 vers la partie de support 4 de la console 2, lorsqu'il existe un jeu entre ces deux éléments. Aussi, même dans un tel cas, la goulotte 1 une fois chargée repose sur la console 2, de sorte que c'est celle-ci qui prend en charge l'essentiel du poids de cette goulotte 1 et des câbles qui s'y trouvent, et non Les ailes 17 et 17'. En outre, on remarquera que comme Les embases 16 et 16' s'étendent à l'extérieur du passage délimité par les ailes 17 et 17', le fond 8 de la goulotte 1 peut reposer sur toute sa largeur sur la console 2.

L'écart entre les pièces 13 et 13' peut être modifié, si bien que, contrairement à l'élément de fixation décrit dans GB-A-2 014 643, le dispositif de fixation 3 convient pour des goulottes de différentes largeurs. Cela se traduit par une réduction du nombre de références à fabriquer, commercialiser et stocker, et donc par des économies, conformément au but que l'invention entend atteindre. Cela vaut d'autant plus que les pièces 13 et 13' sont identiques.

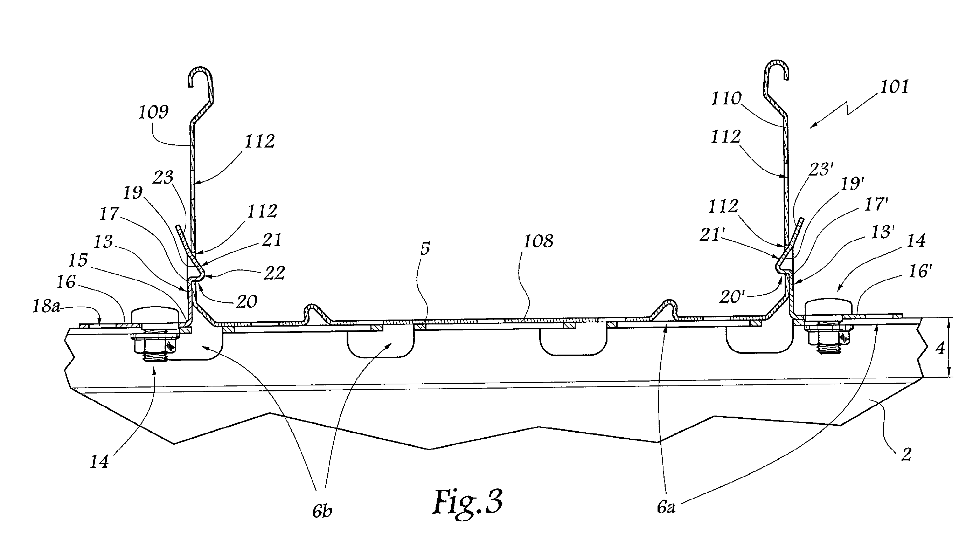

La portion de chemin de câbles représentée à la figure 3 se distingue de celle des figures 1 et 2 en ce que la goulotte 1 y est remplacée par une goulotte 101, plus haute. Les références repérant les différentes parties de la goulotte 1 seront augmentées de 100 pour désigner, dans ce qui suit, les parties analogues de la goulotte 101.

Les parois latérales 109 et 110 sont plus hautes que les parois latérales 9 et 10, si bien que chacune d'entre elles comporte deux rangées de trous latéraux 112 au lieu d'une seule. Comme la distance entre la plus basse de ces deux rangées de trous latéraux 112 et le fond 108 est égale à celle qui sépare une rangée de trous latéraux 12 du fond 8, la goulotte 101 s'adapte sur la console 2, dans le dispositif de fixation 3, de la même manière que la goulotte 1.

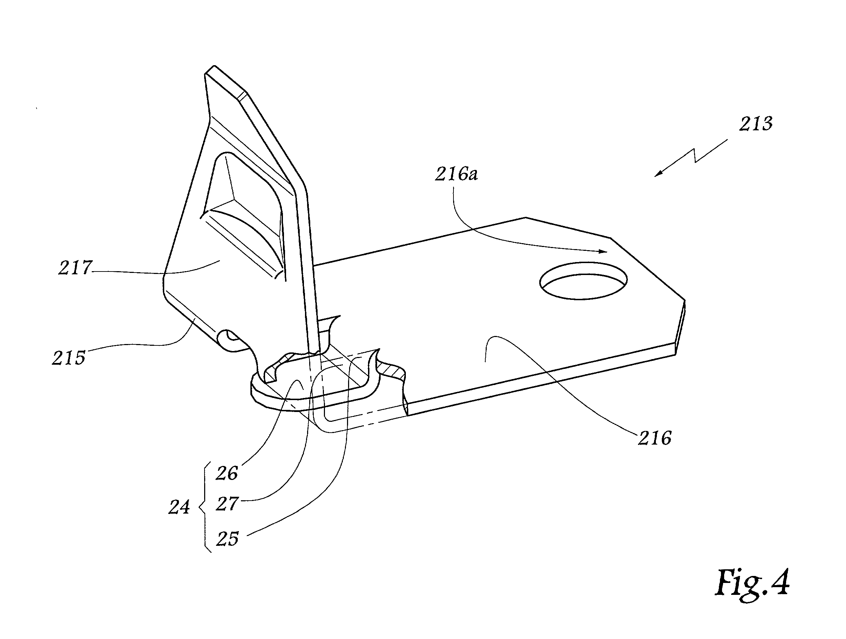

La figure 4 représente l'une, référencée 213, de deux pièces identiques 213 et 213' qui constituent un dispositif de fixation 203 selon une variante de réalisation de l'invention.

On ne décrira ci-après que ce qui distingue la pièce 213 d'une pièce 13, dont les parties sont repérées par des références qui seront augmentées de 200 pour désigner, dans ce qui suit, les parties analogues de la pièce 213.

L'embase de fixation 216 de cette pièce 213 est dirigée dans la même direction que la bosse 219. Elle porte un crochet 24, qui s'étend au-dessous d'elle, à proximité de l'aile 217 de la pièce 213, et comporte deux portions d'extrémité 25 et 26. La portion 25 descend à partir de l'embase de fixation 216 et elle est séparée par un pli à angle droit 27 de la portion 26, laquelle est sensiblement parallèle à l'embase de fixation 216 et dirigée dans la direction opposée à celle de la bosse 219.

Le crochet 24 est découpé dans l'embase de fixation 216 et formé par emboutissage du flan de tôle dans laquelle est réalisée la pièce 213.

Dans ce qui suit, la référence d'une partie de la pièce 213' est construite en accolant un prime (') à la référence désignant la même partie sur la pièce 213.

Le référence 216a désigne l'extrémité libre de l'embase de fixation 216.

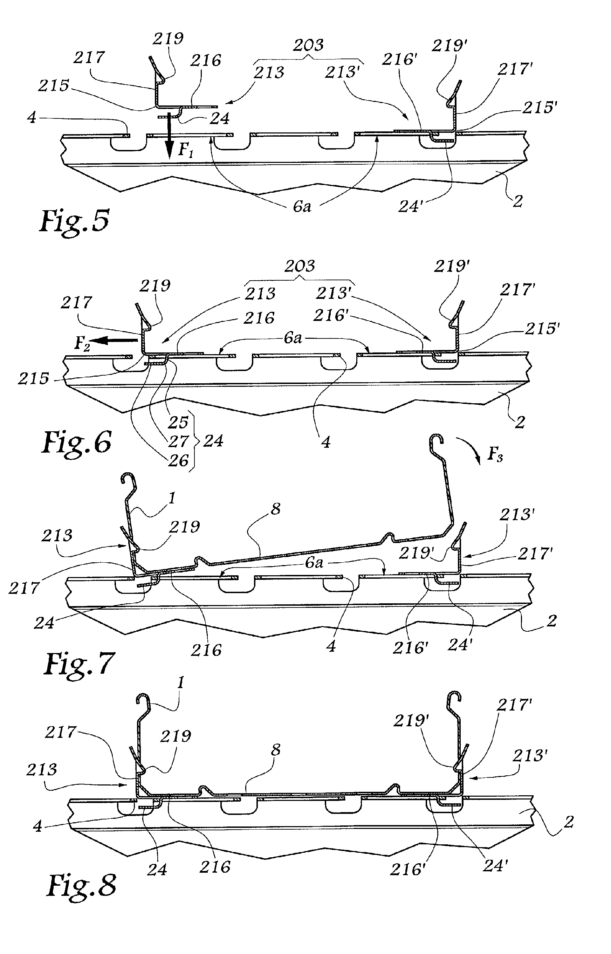

Sur la figure 5, la pièce 213' repose sur la partie de support 4 de la console 2, après avoir été mise en place comme va l'être la pièce 213, ce qui va être décrit maintenant. On commence par faire passer la portion 26 du crochet 24 dans un trou 6a (flèche F1), en même temps qu'on place l'embase de fixation 216 sur la partie de support 4, en prenant soin de la diriger vers l'embase de fixation 216' de la pièce 213'. Ceci mène à la situation illustrée à la figure 6. Ensuite, on éloigne la pièce 213 de la pièce 213', en faisant coulisser l'embase de fixation 216 sur la partie de support 4 (flèche F2), jusqu'à ce que la portion 25 du crochet 24 bute contre le bord du trou 6a. Enfin, on encliquette la goulotte 1 entre les ailes 217 et 217', par exemple comme cela est illustré à la figure 7, c'est-à-dire en basculant cette goulotte 1 contre les embases 216 et 216' (flèche F3), après avoir placé la bosse 219 dans un trou latéral 12.

Sur la figure 8, la goulotte 1 est montée et l'ensemble est verrouillé de lui-même. Plus précisément, chacun des crochets 24 et 24' est en butée contre un bord d'un trou 6a. Cela bloque l'écartement des pièces 213 et 213' dont les ailes 217 et 217' maintiennent latéralement la goulotte 1, tandis que cette dernière empêche que les embases de fixation 216 et 216' puissent être décrochées en étant coulissées l'une vers l'autre. Les bosses 219 et 219' retiennent la goulotte entre les ailes 217 et 217', dont le basculement vers l'extérieur, autour des plis 215 et 215', est empêché par le fait que le fond 8 de la goulotte 1 recouvre les embases de fixation 216 et 216'.

L'invention ne se limite pas aux modes de réalisation décrits précédemment. En particulier, un élément de support autre que la console 2 peut être utilisé, tel que par exemple une équerre ou une barre horizontale fixée par deux pattes latérales à un plafond.

Parmi les avantages de l'invention, on notera que le dispositif de fixation 3 ou 203 s'adapte sur des consoles pouvant également être utilisées de manière classique. Il n'est donc pas nécessaire de fabriquer des consoles spécifiques, ni de gérer le transport et le stockage de telles consoles, ce qui se traduit par des économies.

De plus, ces dispositifs de fixation 3 ou 203 conviennent pour des goulottes de différentes hauteurs comme cela ressort de la comparaison des figures 2 et 3. Comme précédemment, cela conduit à une réduction du nombre de référence à fabriquer, gérer et stocker.

## Revendications

1. Dispositif de fixation d'une goulotte (1 ; 101) d'un chemin de câbles ou analogues sur un élément de support (2) de cette goulotte (1 ; 101), ce dispositif de fixation étant destiné à être rapporté sur l'élément de support (2) et comportant deux branches (17, 17' ; 217, 217') de maintien latéral de la goulotte (1 ; 101), chaque branche (17, 17' ; 217, 217') comportant l'un d'au moins deux organes (19, 19' ; 219, 219') de retenue de la goulotte (1 ; 101) entre les deux branches (17, 17' ; 217, 217'), **caractérisé en ce qu'**il comporte des première et deuxième pièce (13, 13' ; 213, 213') destinées ; à être disposées de part et d'autre de la goulotte (1 ; 101), chacune de ces première et deuxième pièces (13, 13' ; 213, 213') comportant l'une des deux branches (17, 17' ; 217, 217') dont chacune se prolonge par une embase (16, 16' ; 216, 216') de fixation sur, l'élément de support (2).

2. Dispositif selon la revendication 1, **caractérisé en ce que** l'embase (216, 216') d'au moins la première pièce (213, 213') porte des moyens (24, 24') pour son accrochage à l'élément de support (2) et à une extrémité (216a) transversalement décalée de la branche (217, 217') de cette première pièce (213, 213').

3. Dispositif selon la revendication 2, **caractérisé en ce que** les moyens (24, 24') pour l'accrochage d'une embase (216, 216') comprennent une première (26) et une deuxième portion (25) qui descend depuis l'embase (216, 216') et se prolonge par la première portion (26) apte à venir en butée contre une surface inférieure de l'élément de support (2).

4. Dispositif selon la revendication 3, **caractérisé en ce que** les moyens pour l'accrochage de l'embase (216, 216') de la première pièce (213, 213') présentent la forme d'un crochet (24, 24') dont la première portion (26) est sensiblement dirigée dans la direction opposée à celle de l'organe de retenue (219, 219') que comporte cette première pièce (213, 213').

5. Dispositif selon l'une quelconque des revendications 2 à 4, **caractérisé en ce que** l'embase (216, 216') d'au moins la première pièce (213, 213') est aplatie et sensiblement dirigée dans la même direction que l'organe de retenue (219, 219') que comporte cette première pièce (213, 213').

6. Dispositif selon l'une quelconque des revendications 2 à 5, **caractérisé en ce que** les moyens (24, 24') d'accrochage de l'embase (216, 216') de la première pièce (213, 213') sont placés à proximité de la branche (217, 217') de cette première pièce (213, 213').

7. Dispositif selon l'une quelconque des revendications précédentes, **caractérisé en ce que** la première et la deuxième pièce (13, 13' ; 213, 213') sont réalisées dans de la tôle, chaque branche ayant la forme d'une aile (17, 17' ; 217, 217') dans laquelle l'organe de retenue, en forme de bosse (19, 19' ; 219, 219'), est formé par emboutissage.

8. Chemin de câbles ou analogues, formée d'une succession de goulottes (1 ; 101) réalisées en tôle et comprenant deux parois latérales (9, 10 ; 109, 110), ce chemin comportant au moins un élément de support (2), **caractérisé en ce qu'**il comporte un dispositif de fixation (3 ; 203) selon l'une quelconque des revendications précédentes, ce dispositif de fixation (3 ; 203) étant rapporté sur l'élément de support (2), une première (1 ; 101) desdites goulottes étant placée entre les deux branches (17, 17' ; 217, 217').

9. Chemin selon la revendication 8, **caractérisé en ce que** chacune desdites deux parois latérales (9, 10 ; 109, 110) est perforée de l'une d'au moins deux rangées de trous latéraux (12 ; 112), l'un et l'autre organe de retenue (19, 19' ; 219, 219') étant respectivement engagés dans un trou latéral (12 ; 112) de l'une des deux rangées et dans un trou latéral (12 ; 112) de l'autre rangée.

10. Chemin selon la revendication 8 ou 9, **caractérisé en ce que** les deux branches (17, 17' ; 217, 217') sont aptes à être élastiquement écartées l'une de l'autre pour la pose de la goulotte (1 ; 101).

11. Chemin selon l'une quelconque des revendications 8 à 10, **caractérisé en ce que** les deux pièces (13, 13' ; 213, 213') sont identiques.

12. Chemin selon l'une quelconque des revendications 8 à 11, **caractérisé en ce que** le dispositif de fixation (203) est selon l'une quelconque des revendications 2 à 6, les moyens d'accrochage (24, 24') de l'embase (216, 216') de la première pièce (213, 213') passant à travers l'élément de support (2) et étant en butée dans la direction opposée à la deuxième pièce (213, 213'), contre l'élément de support (2).

13. Chemin selon la revendication 12, **caractérisé en ce que** le dispositif de fixation (203) est selon la revendication 5, l'embase (216, 216') de la première pièce (213, 213') s'étendant entre un fond (8) de la première goulotte (1 ; 101) et l'élément de support (2).
